# EUROPÄISCHE PATENTANMELDUNG

(11) **EP 2 455 271 A1**
(43) Veröffentlichungstag der Anmeldung: **23.05.2012**
(21) Anmeldenummer: 12150903.8
(22) Anmeldetag: 22.08.2008
(51) Int. Cl.: B62B 7/08, B62B 7/06

(54) **Schiebewagengestell für Kinder- und/oder Puppenwagen**

(30) Priorität: 19.05.2008 DE 202008000058 U
(62) Teilanmeldung aus: 08162849.7
(71) Anmelder: TFK Trends for Kids GmbH Vertrieb von Kinder-Trend-Artikeln, 84030 Ergolding (DE)
(72) Erfinder: BEGER, Udo, 84034 Landshut (DE)
(74) Vertreter: Pröll, Jürgen

(57) **Zusammenfassung**

Die Erfindung betrifft ein Schiebewagengestell für Kinder- und/oder Puppenwagen, aufweisend:
mindestens zwei untere hintere Gestellholme (1a,1b) und/oder Stützholme mit Lagerelementen für seitliche Hinterräder (3), mindestens ein damit verbundenes, vorderseitig vorstehendes Profilrohr (11), mindestens ein vorderes Lagerelement (4) für eine Radanordnung mit mindestens einem Rad (5). Zur Veränderung des Radachsenabstandes zwischen den Hinterädern und dem mindestens einem Vorderrad ist vorgesehen, dass das mindestens eine vordere Lagerelement für die mindestens eine Vorderradanordnung an dem vorderen Ende einer Teleskopstange (10) befestigt ist, die in einer im Querschnitt angepassten Innenlängsführung im Profilrohr (11) zur Veränderung des Radachsenabstandes zwischen den Hinterrad- und den Vorderradachsen verschiebbar gelagert ist und mindestens in einer vorgezogenen Position arretierbar ist.

## Beschreibung

Die Erfindung betrifft ein Schiebewagengestell für Kinder- und/oder Puppenwagen mit den im Oberbegriff des Anspruchs 1 angeführten Merkmalen.

Ein Kinderwagengestell der gattungsgemäßen Art ist aus der EP 1 366 968 B1 bekannt. Das aufstellbare Spreizgestänge ist in Form eines Kreuzgestänges angegeben, das in einem bestimmten Abstand zum vorderen Verbindungsteil der obenseitigen seitlichen Gestellholme vorgesehen und derart ausgebildet ist, dass nach dem Aufstellen des Wagengestells die oberen und die unteren Gestellholme in eine V-Position sowohl zueinander als auch gegeneinander verbracht sind und beim Zusammenlegen des Spreizgestänges die oberen und unteren Holme gleichzeitig aufeinanderzu verschwenken. Die vorderen Holmenden sind dabei an einem Brückenteil schwenkbeweglich gelagert, so dass sie sich aufeinanderzu bewegen können. Ein solches Wagengestell ist nur für die Aufnahme von Sitzeinsätzen geeignet, also als Buggy verwendbar, nicht jedoch zur Aufnahme eines Liegewageneinsatzes, da der vorder- und/oder rückseitige Überstand zu einer Schwerpunktsverlagerung bei dem relativ kurzen Radabstand zwischen den Vorder- und Hinterrädern und damit zu einem Kippen in schrägen Fahrlagen führen könnte.

Um den Abstand zwischen den Hinterrädern und der Vorderradanordnung zu vergrößern, um auch Liegeeinsätze zwischen die beiden Seitenholme einfügen zu können, ist es aus der DE 20 2007 014 299 U1 bekannt, an einem Teleskoprohr vorderseitig eine Vorderradanordnung anzubringen und das Teleskoprohr in einem Profilrohr und am rückseitig vorstehenden Ende einen Träger für ein Spreizgestänge anzubringen. Jede der Spreizstangen ist mit dem zweiten Ende jeweils an einem oberen oder unteren Gestellholm befestigt. Das Teleskoprohr ist in einem Profilrohr verschiebbar gelagert, so dass beim Einschieben des vorderseitig überstehenden Teleskoprohres dieses mit dem vorderseitigen Radlagerhalter und den Rädern nach hinten geschoben werden kann. Dadurch wird der Träger nach hinten bewegt, was gleichzeitig ein Verschwenken der in Lagerausnehmungen am Träger schwenkbar gelagerten Stangen des Spreizgestänges bewirkt, so dass darüber ein Zusammenfalten des Kinderwagengestells ermöglicht wird. Diese Ausbildung hat den Nachteil, dass die schräg nach oben verlaufenden Gestellholme nicht über die gesamte Länge des Wagengestells für Adapter zur Aufnahme von Kinderwageneinsätzen, insbesondere Liegeeinsätze, zur Verfügung stehen. Die Kippsicherheit wird dann gewährleistet, wenn das Teleskoprohr vollständig ausgezogen ist, wodurch ein notwendiger Sicherheitsabstand zwischen den hinteren und vorderen Rädern gegeben ist. Um ein Umkippen des Fahrgestells durch den belegten Liegeeinsatz zu vermeiden, muss dieser so verlagert angebracht werden, dass er die Hinterräder nicht merklich übersteht. Des Weiteren ist, insbesondere wenn dieses Wagengestell auch für einen Kinderwagensitzeinsatz verwendet wird, die Teleskopstange mit dem sich daran befindlichen Vorderrad ein störendes Element.

Aus der EP 1 466 810 A1 ist ein Kinderwagengestell bekannt, bei dem ein Träger eines Spreizgestänges nach vorn verschiebbar auf einem Rohr angebracht ist, das als Trägerrohr vorgesehen ist. Der Träger ist nach vorn verschiebbar gelagert, so dass über die Spreizstangen die unteren Gestellholme, an denen rückseitig die Räder angebracht sind, in Richtung des Rohres sich verschwenken können. Dieses Kinderwagengestell weist im Übrigen auch obere schräg verlaufende Gestellholme auf, an denen über Rastkupplungen Schiebestangen angebracht sind. Die beiden Gestellholme sind über ein Verbindungsteil miteinander verbunden, an dem auch das Rohr befestigt ist. Ferner befindet sich an dem Verbindungsteil die im Wesentlichen senkrechte Achse einer Vorderradanordnung, die um diese Achse verdrehbar ist. Die beiden Schiebestangen, die in Verlängerung zu den Gestellholmen vorgesehen sind, sind auf die Gestellholme aufschwenkbar. Auch dieses Gestell ist nur als Kindersportwagen verwendbar, da die Achsabstände nicht ausreichend groß sind, um bei Einsatz eines überstehenden Liegeeinsatzes ein Umkippen, insbesondere bei Kurvenfahrten, zu vermeiden.

Die Patentschrift WO 2007/071141 A1, betrifft ein Kinderwagengestell. Dieses Kinderwagengestell umfasst zwei Hinterräder und ein Vorderrad, das an dem vorderen Ende einer durchgehenden Stange befestigt ist. Darüber hinaus ist ein Verschiebeelement auf der durchgehenden Stange geleitend gelagert. Dieses Verschiebeelement dient zum Zusammenlegen des Kinderwagengestells.

Die Patentschrift WO 2006/116900 A1 betrifft ein Kinderwagengestell. Dieses Kinderwagengestell umfasst zwei hintere Räder und ein Vorderrad , das an dem vorderen Ende einer durchgehenden und in der Länge nicht veränderbaren Stange angeordnet ist. Auf der durchgehenden Stange ist ein Verschiebeelement gleitend gelagert. Das Verschiebeelement dient ebenfalls zum Zusammenlegen des Kinderwagens.

Ausgehend vom dargestellten Stand der Technik liegt der Erfindung die Aufgabe zugrunde, ein Wagengestell mit einem solchen Aufbau anzugeben, dass der Radabstand zwischen Vorderradanordnung und Hinterradanordnung im aufgestellten Zustand wahlweise veränderbar ist oder sich automatisch vergrößert und im zusammengelegten Zustand wahlweise verringerbar ist oder sich automatisch verkleinert und ein Verstaugebinde entsteht, das besonders klein ist, und dennoch sichergestellt ist, dass auch ein Liegeeinsatz zwischen die beiden Seitenholme zwischengefügt werden kann, ohne dass die Gefahr der vorderseitigen oder rückseitigen Schwerpunktsverlagerung besteht und damit eine Kippgefahr bei Befahren von schrägen Fahrstrecken oder engen Kurven gegeben ist.

Die Erfindung löst die Aufgabe durch Ausgestaltung des zusammenklappbaren Schiebewagens gemäß der im Anspruch 1 angegebenen technischen Lehre.

Der Schiebewagen nach der Erfindung zeichnet sich dadurch aus, dass das mindestens eine vordere Lagerelement für die mindestens eine Vorderradanordnung an dem vorderen Ende einer Teleskopstange befestigt ist, die in einer im Querschnitt angepassten Innenlängsführung im Profilrohr zur Veränderung des Radachsenabstandes zwischen den Hinterrad- und den Vorderradachsen verschiebbar gelagert ist und mindestens in einer vorgezogenen Position arretierbar ist. Hierdurch wird erreicht, dass unabhängig von den Lagerungen und Befestigungsarten der Gestellholme und des Spreizgestänges der Abstand zwischen Vorderradachsen und Hinterradachsen individuell einstellbar ist. Normalerweise wird die Teleskopstange mit dem daran befindlichen Vorderrad oder Vorderradanordnung im aufgestellten Zustand des Wagengestells vorgezogen, so dass in gewünschter Weise ein ausreichender Abstand zwischen den vorderen und hinteren Achsen besteht. Es können selbstverständlich aber auch Zwischenpositionen eingenommen werden, in denen die Teleskopstange an dem Profilrohr fixiert werden muss, um einen Schiebebetrieb zu ermöglichen. Im eingezogenen Zustand ist die gewünschte Verkürzung gegeben, um das Gestell im zusammengelegten Zustand in eine möglichst kleine Verstaueinheit verbringen zu können. Die Arretierung der Teleskopstange in oder an dem Profilrohr erfolgt mit bekannten Arretierungszapfen, die beispielsweise federbelastet durch kongruente Bohrungen in beiden Teilen greifen.

Die Erfindung ist grundsätzlich auf alle Schiebewagengestelle anwendbar, die untere hintere Gestellholme oder untere, nach unten aufgestellte oder sich aufstellende Stützholme aufweisen, die miteinander oben- und/oder untenseitig verbunden sind oder über einen zwischen obenseitig befestigten oder angelenkten Schiebestangen eingesetzten Einsatz auf Abstand gehalten werden. An den unteren Enden der unteren Gestell- oder Stützholme sind Lagerelemente für seitliche hintere Räder vorgesehen. Mit dieser Anordnung ist mindestens ein nach vorne vorstehendes Profilrohr verbunden, an dessen Ende ein Lagerelement für mindestens ein Vorderrad vorgesehen ist. Anstelle eines einzelnen Profilrohres können auch beabstandet zueinander zwei solche Profilrohre vorgesehen sein, die starr mit den Stützholmen oder unteren Holmen verbunden sind oder auch federelastisch und jeweils Lagerelemente für je eine Vorderradanordnung oder ein Vorderrad aufweisen. Anstelle eines einzelnen Vorderrades bei einer Ausführung mit nur einem Profilrohr kann auch ein Brückenträger zum Einsatz kommen, an dessen seitlichen Enden einzelne Vorderradanordnungen gelagert sind. Die in das Profilrohr einschiebbare Teleskopstange bzw. in die Profilrohre einschiebbaren Teleskopstangen, an deren vorderem Ende bzw. vorderen Enden die Lagerelemente für die Vorderräder nach der Erfindung angebracht sind, können wahlweise vorgezogen oder auch eingeschoben werden. Die Erfindung ist auch auf solche Wagengestelle anwendbar, bei denen an den unteren Gestellholmen, die V-förmig an einem Profilrohr befestigt sind, Stützholme schwenkbeweglich angelenkt sind, an deren oberen Enden Gestellholme mit Schiebestangen klappbar oder starr verbunden sind, die miteinander über einen Querholm verbunden sind, der sich mit einer starren oder federnden Stütze an dem Profilrohr abstützt. Bei einer solchen Ausführung ist in der Regel nur ein Profilrohr vorgesehen. Auch können die Stützholme die seitlichen Abschnitte eines geraden oder gebogenen Brückenelementes sein.

Um ein automatisches Verändern des Radabstandes beim Zusammenlegen zu ermöglichen, sieht Anspruch 2 vor, dass die zwei unteren spiegelbildlich angeordnete Gestellholme aus von vorn nach hinten verlaufende, durchgehende oder aus miteinander verbundenen Abschnitten gebildete Gestellholme sind, an deren hinteren Enden Lagerelemente für hintere Räder oder Räderanordnungen befestigt sind, dass ein aufstellbares Spreizgestänge vorgesehen ist, das mindestens zwei obere Spreizstangen aufweist, die seitlich nach oben abstehend verlaufen und untenseitig schwenkbar gelagert und mit ihren oberen Enden schwenkbeweglich mit den oberen Gestellholmen direkt oder indirekt verbunden sind, dass das Verbindungsteil an der mindestens einen Teleskopstange vorderseitig befestigt ist, dass das Profilrohr Schwenklager für die unteren schwenkbaren Gestellholme aufweist, dass auf dem Profilrohr verschiebbar und mindestens in der hinteren Verschiebeposition, in der das Wagengestell aufgestellt ist, mindestens ein arretierbarer Träger für das Spreizgestänge gelagert ist, dass an dem Träger verschwenkbar zwei untere Stützholme seitlich nach unten abstehend verlaufend angelenkt sind.

Grundsätzlich können eine Teleskopstange und ein Profilrohr vorgesehen sein, in die die Teleskopstange einschiebbar ist. Es ist aber auch möglich, zwei Profilrohre beispielsweise durch ein Brückenteil miteinander zu verbinden und diese parallel zueinander oder hinten V-förmig aufeinanderzu verlaufend vorzusehen und hierin zwei Teleskopstangen verschiebbar einzuführen. In diesem Fall sollte dafür Sorge getragen werden, dass das Verbindungsteil zur Aufnahme der Holme beide Teleskopstangen miteinander verbindet und auch der Träger auf beiden Profilrohren oder auf einer zwischengefügten Schiene verschiebbar angelagert ist. Diese Ausführung hat den Vorteil, dass anstelle eines breiten Vorderradträgers, der an einer Stange angebracht ist, und zwei beabstandet zueinander angeordnete Radlager aufweist, an den vorderen Enden der Teleskopstangen jeweils eine Radanordnung direkt angebracht werden kann, wenn das Schiebewagengestell vorne zwei Räderanordnungen aufweisen soll. Des Weiteren ist es nicht erforderlich, dass die oberen Spreizstangen und die unteren Spreizstangen des Spreizgestänges sowohl vertikal als auch horizontal verschwenkbar gelagert sein müssen. Sie können auch jeweils bügelförmig zusammengefasst sein und nur in vertikaler Richtung verschwenkbar gelagert sein. Dann ist allerdings das Gestell in horizontaler Richtung nicht zusammenschwenkbar, sondern nur in vertikaler Richtung.

Der erfindungsgemäße Aufbau gestattet eine Ausführungsform, bei der die oberen Holme und die unteren Holme in der seitlichen Spreizstellung sowohl im aufgestellten Zustand des Fahrgestells auch im zusammengelegten Zustand verbleiben, wenn die oberen Holme und die unteren Holme derart an horizontalen, quer zur Längsachse des Fahrgestells verlaufenden Schwenklagern angelenkt sind und fest miteinander verbunden sind, dass ein Aufeinanderzuschwenken der Schenkel nicht möglich ist. In diesem Fall müssen auch die Stützholme am Träger so gelagert sein, dass keine einziehende Kraft auf die unteren Holme ausgeübt wird. Die Stützholme sind dann in Form einer Brücke miteinander verbunden und werden lediglich nach hinten aus den Aufnahmen im Träger mit ihren oberen Enden ausgeschwenkt, während das verbindende Brückenteil im Träger schwenkbeweglich befestigt ist. Ebenso müssen die Spreizstangen in dieser Ausführung U- oder V-förmig fest miteinander verbunden sein und dürfen sich nicht aufeinanderzu bewegen, wenn sie aus den Lagerschalen in dem Träger ausschwenken. Das Brückenteil dieser Spreizstangen bleibt auch im Träger schwenkbar um eine horizontale Achse gelagert. Wenn die oberen Holme jedoch schwenkbeweglich an dem Verbindungsteil befestigt sind und die Spreizstangen, die Stützholme und die unteren Holme, die vorzugsweise von vorn schräg nach hinten verlaufen, schwenkbeweglich gelagert sind, so kann durch Lagerung der Spreizstangen und der Stützholme in den Einzellagerstellen durch entsprechende Auslegung der Gelenke und der Bemessung der Elemente erreicht werden, dass beim Vorschieben des Trägers automatisch das Gestell auch in seitlicher horizontaler Richtung, also nicht nur in vertikaler Richtung, zusammenfährt. Dadurch kann das Verstauvolumen des Fahrgestells nochmals verkleinert werden.

Gemäß der im kennzeichnenden Teil des Anspruchs 3 angegebenen Lehre zeichnet sich ein zusammenklappbarer Schiebewagen dadurch aus, dass die zwei unteren spiegelbildlich angeordnete Gestellholme aus von vorn nach hinten im Wesentlichen V-förmig verlaufende, durchgehende oder aus miteinander verbundenen Abschnitten gebildete Gestellholme sind, an deren hinteren Enden Lagerelemente für hintere Räder oder Räderanordnungen befestigt sind, dass ein aufstellbares Spreizgestänge vorgesehen ist, das mindestens zwei obere Spreizstangen aufweist, die seitlich nach oben abstehend verlaufen und untenseitig schwenkbar gelagert und mit ihren oberen Enden schwenkbeweglich mit den oberen Gestellholmen direkt oder indirekt verbunden sind, dass das Verbindungsteil an mindestens einer Teleskopstange vorderseitig und um eine horizontale Achse eines Schwenklagers schwenkbeweglich befestigt ist, dass das Profilrohr Schwenklager oder Befestigungspunkte für die unteren schwenkbaren oder bügelförmig starr ausführbare Gestellholme aufweist, dass an dem Profilrohr oder an einem Brückenelement zwischen den unteren Holmen die beiden oberen Spreizstangen oder das Brückenelement mit den beiden oberen Spreizstangen oder die beiden oberen Spreizstangen direkt an den unteren Holmen schwenkbeweglich gelagert sind, dass das Profilrohr als Träger in der hinteren Verschiebeposition, in der das Wagengestell aufgestellt ist, mittels einer lösbaren Arretiereinrichtung an der Teleskopstange fixiert ist, und dass an der Teleskopstange vorderseitig das Lagerelement für die Vorderradanordnung vorgesehen ist, wobei nach der Entriegelung der Arretiereinrichtung beim Verbringen des Wagengestells aus der Gebrauchsstellung in die zusammengeklappte Verstaustellung durch Vorschieben des Profilrohres auf dem Teleskoprohr die oberen Spreizstangen mindestens nach hinten über die unteren Gestellholme schwenken und die mitgekoppelten oberen Gestellholme in Richtung der Ebene der Teleskopstange und der des Profilrohres verschwenken.

Gemäß dieser technischen Lehre ist ein Träger, der auf dem Profilrohr verschiebbar gelagert ist, nicht erforderlich. Das Profilrohr selbst kann als Träger verwendet werden und ist auf dem Teleskoprohr verschiebbar angeordnet. Wenn das Gestell nicht seitlich zusammengelegt werden soll, können die unteren Holme fest an dem relativ kurz ausgebildeten Profilrohr an Fixpunkten befestigt sein. Dabei können die unteren Holme horizontal oder aber auch in einem schrägen Winkel nach hinten unten verlaufen. Die beiden Enden der unteren Holme können über eine Achse miteinander verbunden sein, auf deren vorstehenden Naben die hinteren Räder aufsteckbar sind. Die Spreizstangen sind in diesem Fall ebenfalls miteinander starr verbunden ausgeführt und können, je nach baulicher Anordnung, an einem Schwenklager an dem Profilrohr oder an einem schwenkbar gelagerten Brückenteil, das an den unteren Holmen beabstandet zu der hinteren Achse im vorderen Bereich angeordnet sind, angelenkt sein. Das Brückenteil ist erforderlich, da beim Verschwenken in die Verstauposition automatisch die über die oberen Holme sich mit bewegende Teleskopstange in das Profilrohr geschoben wird. Im Übrigen muss im aufgestellten Zustand eine Arretierung dafür Sorge tragen, dass sich die Teleskopstange, die auch ein Rohr sein kann, nicht in dem Profilrohr verschieben lässt. Ist hingegen ein seitliches Einschwenken der hinteren Räder gekoppelt mit dem Einschwenken der oberen und unteren Holme sowie der Spreizstangen gewünscht, so müssen diese jeweils um Schwenklager schwenkbar an dem Verbindungsteil, dem Brückenteil und an dem Profilrohr um solche Achsen verschwenkbar angelenkt sein, damit sie bei Vorschieben des Profilrohres auf der Teleskopstange auch seitlich zusammenfahren können. Gleichzeitig wird das Gestell auch in vertikaler Richtung zusammengefahren. Das Wirkungsprinzip beider baulicher Anordnungen ist gleich. Die oberen Holme schwenken stets in Richtung der unteren Gestellholme bzw. in Richtung der Teleskopstange und des Profilrohrs.

Das vorderseitige Verbindungsteil, an dem die beiden seitlichen Gestellholme, die schräg ansteigend im aufgestellten Zustand des Wagengestells verlaufen, befestigt sind, ist dabei an einer Teleskopstange vorderseitig befestigt. Die Teleskopstange selbst ist in einem Profilrohr mit im Querschnitt angepasster Innenlängsführung geführt. Die Teleskopstange muss so lang ausgebildet sein, dass ein Abschnitt sich bei vorgezogenen Zustand noch im Profilrohr befindet. Die Längen des Profilrohres und der Teleskopstange können jedoch so aufeinander abgestimmt sein, dass auch im zusammengeschobenen Zustand die Teleskopstange noch im Profilrohr verbleibt oder rückseitig austritt. Des Weiteren ist in an sich bekannter Weise auf dem Profilrohr verschiebbar und mindestens in der hinteren Position arretierbar der Träger für das Spreizgestänge gelagert, das über obere Stützholme die seitlichen Gestellholme trägt und untenseitig die unteren Stützholme, die mit ihren Enden an den Endbereichen der untenseitig vorgesehenen, von vorn nach hinten V-förmig schräg spreizend nach unten verlaufenden Gestellholme angelenkt sind. Die Lager sind so positioniert und auf die Form der Stützholme und Spreizstangen abgestimmt, dass beim Vorschieben des Trägers durch Ausschwenken der unteren Stützstangen aus den Lagerausnehmungen des Trägers diese automatisch eingezogen werden, wodurch die unteren Gestellholme aufeinanderzu verschwenken, so dass die außenseitig vorgesehenen Räder im zusammengelegten Zustand des Fahrgestells einen geringeren Abstand als im aufgestellten Zustand aufweisen.

Die obenseitig vorgesehenen Stützholme können verschiedenartig ausgeformt sein. Beispielsweise ist es möglich, diese so zu biegen, dass sie U-förmig, V-förmig oder parabelförmig verlaufen. Die Schwenklager können als Drehlager in Lagerschalen des Trägers nahezu horizontal verlaufend vorgesehen sein. Dadurch bleibt der Abstand der seitlichen schrägen Gestellholme, die heruntergeschwenkt werden, wenn der Träger nach vorne bewegt wird, erhalten. Die seitlichen Gestellholme können seitlich die hinteren Räder im eingezogenen Zustand übergreifen. Diese U-Form kann auch durch eine Y-förmige Ausbildung der Stützholme realisiert werden, beispielsweise kann die Mittensäule der Y-Form an dem Träger nach hinten schwenkbeweglich befestigt sein und die beiden seitlichen Arme mit ihren nach oben sich erstreckenden Schenkeln an den Schwenklagern an den seitlichen oberen Gestellholmen oder an Schwenklagern an Haltern befestigt sein, die an den Gestellholmen nach unten abstehend vorgesehen sind. Diese Halter können aber auch an den in Verlängerung zu den Holmen vorgesehenen Schiebestangen im unteren Bereich vorgesehen sein.

Die Schiebstangen können, wie dies auch bekannt ist, durch Rastkupplungen an den Enden der Holme befestigt und so nach vorne verschwenkbar ausgeführt sein. Das so ausgebildete Wagengestell lässt sich in der Form zusammenklappen, dass durch Vorschieben des Trägers die unteren Gestellholme, die mit den vorderen Enden an dem Profilrohr befestigt sind, zusammenfahren und durch das Vorschieben des Trägers zugleich das Teleskoprohr in das Profilrohr hineingeschoben wird, so dass sich das Wagengestell automatisch verkürzt, wobei die Längen der schräg nach oben verlaufenden Holme und der unteren Holme so gewählt sind, dass im zusammengeklappten Zustand die hinteren Räder in Höhe der Rastkupplungen an den Schiebestangenenden liegen. Die Schiebestange, die auch die Gesamtlänge des zusammengelegten Gestells mitbestimmt, kann nach vorne umgelegt werden.

Es hat sich gezeigt, dass durch diese Ausführung das Wagengestell so klein zusammengelegt werden kann und dennoch für große Liegewageneinsätze, wie sie für Babys verwendet werden, einsetzbar ist, ohne dass eine Kippgefahr bei ansteigender Fahrstrecke besteht, dass das Gestell auch im Kofferraum eines Cabriolets oder eines Sportwagens untergebracht werden kann, ohne dass die Räder abgenommen oder andere Teile zerlegt oder abgenommen werden müssen. Andererseits wird ein gekoppeltes Aufstellen ermöglicht, zu welchem Zweck die Schiebestangen zurückgeklappt und in die Verlängerungspositionen zu den Gestellholmen bei gleichzeitigem Gegendruck auf die hinteren Räder verschwenkt werden, wodurch eine Aufstellbewegung aller Elemente ausgelöst wird. In der Endaufstellposition sorgt eine Arretierungseinrichtung an dem Träger dafür, dass das Gestell aufgestellt bleibt. Eine solche Arretiereinrichtung ist auf einfachste Weise durch einen Schieber realisierbar, der senkrecht in dem Träger geführt ist und mit einem Bolzen in eine Bohrung des Profilrohres eintaucht. Befindet sich der Schieber vorderseitig am Träger, also in Richtung des Vorderrades, so kann durch entsprechende Längenausbildung des Teleskoprohres dieses gleichzeitig und zusätzlich durch Eintauchen des Bolzens in eine korrespondierende Bohrung in der Teleskopstange mit arretiert werden, was aber grundsätzlich nicht erforderlich ist. Durch die Schiebelagerung der Teleskopstange in dem Profilrohr ist eine dämpfende Nachgiebigkeit gegeben, die Stoßbelastungen auf die Vorderradanordnung dämpft. Dies kann durch Abdichten des Teleskoprohres gegenüber dem Profilrohr noch verstärkt werden, da dadurch die Luftsäule innerhalb des Profilrohres zur Dämpfung genutzt werden kann. Die Teleskopstange und auch alle anderen Holme, Stützen und Stangen sind üblicherweise Profilrohre, z.B. Aluminium-Rohre mit runden, ovalen oder eckigen Querschnitten.

Das Verbindungsteil, das die oberen Gestellholme verbindet, kann als Kunststoffteil ausgebildet sein und zugleich auch das Lagerelement für eine Vorderradanordnung aufweisen. Die Vorderradanordnung kann aus einer Einzelrad-, einer Doppelrad- oder auch einer beabstandeten Vorderradanordnung bestehen. Die entsprechenden Lager sind entweder mittig oder an dem Verbindungsteil außenseitig oder an einem gesonderten Brückenteil außenseitig anzubringen, welches auch Bestandteil des Verbindungsteils sein kann. Auch kann anstelle eines Lagerelementes für eine Einzelvorderradanordnung verdrehgesichert ein Brückenelement angebracht sein, an dessen beiden Seiten Vorderräder schwenkbeweglich um Vertikalachsen drehend angebracht sind, die in bekannter Weise auch eine Kurvenfahrt auf einfache Weise ermöglichen, sich aber auch feststellen lassen. Dieses Prinzip ist von Transportrollen mit senkrechten Drehlagern schlechthin bekannt. Die Hinterräder sind einzeln an Lagerelementen an den unteren Gestellholmen drehbar gelagert. Anstelle einzelner Schiebestangen mit daran befindlichen Einzelschiebern kann aber auch ein Schiebebügel die beiden oberen Schiebestangen miteinander verbinden. Im Falle der gegenläufigen Verschwenkbarkeit der oberen Gestellholme muss der Schiebebügel geteilt ausgeführt sein oder die Schenkel durch Rastkupplungen schwenkbar miteinander verbunden sein, um auch die Schiebestangen gegenläufig verschwenken zu können.

Des Weiteren ist es auch möglich, durch Ausbildung und Lagerung der oberen Stützholme dafür Sorge zu tragen, dass beim Zusammenfahren, also beim Verschwenken der Stützholme in den Lagerstellen des Trägers, die Holme aufeinanderzu bewegt werden. Zu diesem Zweck sind die Holme dann nicht nur um eine horizontale, sondern auch um eine vertikale Achse bzw. um ein kombiniertes Gelenk schwenkbar gelagert, um bei gleichzeitigem Aufeinanderzufahren der beiden Seitenholme auch ein Absenken zu ermöglichen. In entsprechender Weise sind die Stützholme dann einzeln auszubilden und zu lagern und auch die Lagerung in dem Träger anzupassen. In dieser Ausführung empfiehlt es sich, eine Anordnung eines Kreuzgestänges zu wählen, wie es in der EP 1 366 968 B1 beschrieben ist. Die vorteilhaften Ausgestaltungen des zusammenklappbaren Schiebewagens nach der Erfindung sind im Detail in den Unteransprüchen angegeben.

Als vorteilhaft hat es sich ebenfalls erwiesen, die Teleskopstange so auszulegen, dass sie beim Einschieben in das Profilrohr eine Federanordnung oder eine Gasdruckfeder in dem Profilrohr oder daran befestigt spannt, die in der gespannten Stellung arretierbar ist und nach dem Lösen der Arretierung die Teleskopstange automatisch vorschiebt. Die Federanordnung oder die Gasdruckfeder unterstützt dabei das Aufstellen des Wagengestells.

Eine Federanordnung, beispielsweise eine Druckfeder, die in das Profilrohr eingesetzt ist und sich am Boden abstützt, kann ferner dazu verwendet werden, um Stöße, die in Längsrichtung auf die Teleskopstange wirken, abzufedern bzw. so zu dämpfen, dass die Stoßenergie nicht auf das gesamte Wagengestell übertragen wird. Dies ist beispielsweise dann gegeben, wenn mit dem Vorderrad gegen eine Bordsteinkante eines Gehweges gefahren wird.

Das Verbindungsteil, das die oberen, schräg nach oben verlaufenden Holme miteinander verbindet, kann auch längs verschieblich auf einer Teleskopstange oder auf einer Anordnung aus zwei Teleskopstangen oder an einer dazwischen vorgesehenen Schiene angebracht sein. Wenn das Wagengestell aufgestellt ist und der Träger für das Spreizgestänge beispielsweise arretiert ist, wird automatisch auch die Teleskopstange in dem Profilrohr in der ausgeschobenen Position gehalten. Es kann aber auch eine zusätzliche Fixierung des Verbindungsteiles auf der Teleskopstange vorgesehen sein, damit das Verbindungsteil im aufgestellten Zustand des Wagengestells im vorderen Bereich der Teleskopstange befestigt ist. Durch die verschiebliche Anordnung auf der Teleskopstange kann die Teleskopstange vorderseitig noch weiter herausgezogen werden, wenn die Abmessungen des Profilrohres und der Teleskopstange aufeinander abgestimmt sind, so dass eine noch größere Stabilität auch bei äußerst kleiner Ausführung des Wagengestells beim Gebrauch und eine hohe Kippsicherheit, insbesondere in Längsrichtung, gegeben ist.

Das Verbindungsteil und das Lagerelement können als ein einziges Element z. B. aus Kunststoff gefertigt sein. Die Lagerstellen für die Gestellholme mit den ausgerichteten Schwenkachsen können dabei angeformte Lagerstellen sein.

Des Weiteren können die oberen Spreizstangen ebenfalls V-förmig verlaufen und am Träger einzeln angelenkt sein. Die unteren Gestellholme und die Stützholme können ebenfalls aufeinanderzu schwenkbeweglich gelagert sein, so dass alle schwenkbar gelagerten Teile beim Zusammenfahren des Schiebewagengestells mitgezogen werden und sich aufeinanderzu bewegen. Die hinteren oberen Spreizstangen können aber auch U-förmig verlaufend ausgebildet und starr miteinander verbunden und gemeinsam oder einzeln schwenkbeweglich an dem Träger oder an dem Profilrohr oder an einem Brückenelement oder an den unteren Holmen angelenkt sein. Auch können die Y- oder T-förmigen Träger solche einzelnen Teile des Spreizgestänges ersetzen.

Die Erfindung wird nachfolgend anhand des in den Zeichnungen dargestellten Ausführungsbeispiels der verschiedenen Aufstellpositionen des Kinderwagengestells ergänzend erläutert.

In den Zeichnungen zeigen:
- Fig. 1: eine perspektivische Darstellung eines Wagengestells nach der Erfindung,
- Fig. 2: das in Fig. 1 dargestellte Wagengestell in einer teil-zusammengeklappten Darstellung und
- Fig. 3: das in den Fig. 1 und 2 angegebene Beispiel eines Fahrgestells im vollständig in vertikaler Richtung zusammengeklappten Zustand.

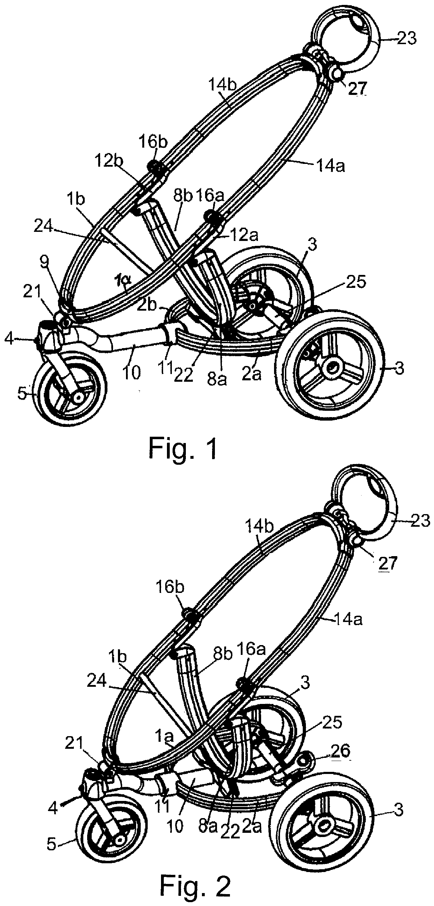

Das in den Figuren 1 bis 3 in der Perspektive dargestellte Wagengestell besteht aus symmetrisch zur Mittenachse angeordneten Gestellholmen 1a, 1b, die von unten nach oben in der Gebrauchsstellung verlaufen. Diese Gestellholme 1a, 1b können in der Vorderansicht z. B. geradförmig, V-förmig, parabelförmig oder teilellipsenförmig ausgeformt sein. Dies hängt jeweils von der Gestaltung ab. Die beiden Gestellholme 1a, 1b können unten direkt über ein Bogenelement miteinander starr verbunden sein, wenn der Abstand sowohl im aufgestellten als auch im abgesenkten Zustand gewünscht ist, oder über ein Verbindungsteil 9, bzw. können die unteren Enden der Gestellholme 1a, 1b in einem Verbindungsteil 9 um eine horizontale Achse einerseits und um eine weitere senkrecht hierzu verlaufende Achse andererseits schwenkbeweglich befestigt sein. Dieses Verbindungsteil 9, z. B. aus Kunststoff gefertigt, kann zugleich auch Vorrichtungen zur Aufnahme eines Lagerelementes 4 für ein Vorderrad 5 aufweisen. Des Weiteren kann das Verbindungsteil auch Lagermöglichkeiten zur Fixierung der erfindungsgemäß vorgesehenen Teleskopstange 10 aufweisen, die an dem Verbindungsteil 9 befestigt ist.

Die Teleskopstange 10 ist in einem Profilrohr 11 geführt, das etwas länger ausgebildet ist als der vorstehende Abschnitt der Teleskopstange 10. Die Gestellholme 2a, 2b können darüber hinaus im vorderen und/oder hinteren Abschnitt abgeknickt bzw. gekröpft sein, sie können aber auch bogenförmig oder linear ausgebildet sein. Am hinteren Ende weisen die Gestellholme 2a, 2b Lagerelemente auf, die vorzugsweise ebenfalls aus Kunststoff gefertigt sind, an denen die hinteren Räder 3 befestigt sind. An einem Träger ist ferner eine Lagerstelle für eine U-förmige Spreizstange 8a, 8b vorgesehen, die aus zwei geteilten oder unten miteinander verbundenen Schenkeln besteht. Die Weite bestimmt dabei die Abstandsweite der Gestellholme 1a, 1b, bzw. ist diese der Abstandsweite angepasst. Die Spreizstange 8a, 8b ist in dem Träger in einer Lagerkammer mit dem mittigen Abschnitt schwenkbar gelagert. Dabei können die einzelnen Hälften gesondert gelagert sein oder aber auch bei einteiliger Ausbildung die U-förmige Spreizstange insgesamt. Die Lagerkammer ist so ausgebildet, dass ein Anschlag in der aufgestellten Position, wie es sich aus Fig. 1 ergibt, gegeben ist, während ein Durchdrücken nach hinten beim Vorschieben des Trägers möglich ist.

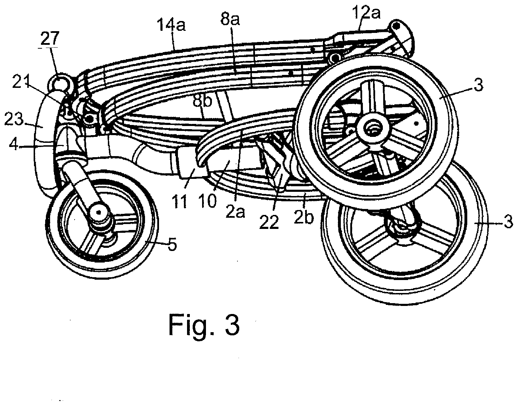

Die oberen Enden der Spreizstange 8a, 8b sind über Schwenklager an Lagerarmen 12a, 12b schwenkbar angelenkt, die ihrerseits entweder an den Gestellholmen 1a, 1b obenseitig befestigt sind oder an den hierzu vorgesehenen Schiebestangen 14a, 14b oder aber an einem Lagerarm, der Gehäusebestandteil der Rastkupplung 16a, 16b ist, die als Schwenkgelenk das obere Ende des Gestellholmes 1a, 1b mit dem unteren Ende der Schiebestange 14a, 14b verbindet. Die Schiebestange 14a, 14b ist also nach vorn verschwenkbar ausgeführt, so dass sie aus der dargestellten Aufstellposition in Fig. 1 in eine aus Fig. 3 ersichtliche Position verschwenkt werden kann, in der die Schiebestange 14a, 14b - dies gilt für beide Seiten gleichermaßen - über das Gestellholm 1a, 1b geschwenkt ist. Am Ende der Schiebestangen 14a, 14b befindet sich je ein Einzelschieber 23, damit das Wagengestell von einer Person geschoben werden kann. Die Gestellholme 1a, 1b sind über das Schwenklager 21 an dem Verbindungsteil 9 in vertikaler Richtung verschwenkbar gelagert.

In Figur 1 kann in der aufgestellten Gebrauchsstellung zwischen die seitlichen Holme ein Kinderliege- oder Kindersitzeinsatz anmontiert werden. Die hierfür benötigten Adapter (nicht dargestellt) sind an den schrägen seitlichen Holmen befestigbar.

In Figur 2 ist das gleiche Gestell dargestellt, bei dem das Profilrohr 11 auf der Teleskopstange 10 vorgeschoben eingezeichnet ist und in Figur 3 ist das Gestell im völlig zusammengelegten Zustand dargestellt.

Aus diesen Abbildungen ist ersichtlich, dass die Breite des Fahrgestells sowohl im aufgestellten als auch im zusammengeklappten Zustand gleich bleibt. Das Gestell besteht aus schräg von unten nach oben verlaufenden Gestellholmen 1a und 1b, an deren oberen Enden Rastkupplungen 16a, 16b befestigt sind, über die die Schiebestangen 14a und 14b angekoppelt sind. Diese Schiebestangen sind obenseitig durch einen an einem Brückenteil befestigen Schiebering 23 miteinander starr verbunden. Untenseitig sind die, ein längliches Oval mit den Schiebestangen 14a, 14b bildenden oberen Gestellholme 1a, 1b über ein Verbindungsteil 9 fest miteinander verbunden und durch eine Querstange 24 auf Abstand gehalten. Das Verbindungsteil 9 ist um eine quer zur Längsachse des Fahrgestells verlaufende Schwenkachse drehbar gelagert, so dass die oberen Gestellholme 1a und 1b abgesenkt oder in die in Figur 5 dargestellte Gebrauchsstellung verschwenkt werden können. Das Lager befindet sich an einem Lagerelement 4, an dem eine Gabel vorgesehen ist, zwischen der das Vorderrad 5 drehbar gelagert ist. Die Teleskopstange 10, an der vorderseitig das Lagerelement 4 und das Schwenklager 21, die in einem Kunststoffgehäuse gemeinsam untergebracht sind, befestigt sind, ist gekröpft ausgeführt und weist einen längeren hinteren Abschnitt auf. Auf diesem Abschnitt ist ein kurzes Profilrohr 11 verschiebbar aufgesetzt und in der Ausführung nach Figur 5 im aufgestellten Zustand an der Teleskopstange 10 durch nicht dargestellte Arretierungsmittel arretiert.

An dem Profilrohr 11 sind seitlich bogenförmig aufgeführte untere Holme 2a, 2b fest befestigt und in der Ausführung nahezu horizontal verlaufend angeordnet. Die Enden dieser Holme sind über eine querverlaufende hintere Achse 25 miteinander verbunden, auf der ein Bremspedal 26 angeordnet ist. Seitlich auf den vorstehenden, nicht sichtbaren Naben der Achse 25 sind die hinteren Räder 3 aufgesteckt. Zwischen den beiden unteren Holmen 2a, 2b befindet sich ein Brückenelement 22, das verschwenkbar gelagert ist und so hoch ausgebildet ist, dass die Teleskopstange 10 darunter fahren kann, auch dann, wenn das Gestell zusammengeklappt ist. Das Brückenelement 22 kann auch so weit gegenüber dem Ende des Profilrohres 11 versetzt sein, dass im eingeschobenen Zustand der Teleskopstange 10 diese vor dem Brückenelement 22 endet. An dem Brückenteil 22 ist obenseitig fest verbunden ein U-förmiger Bügel vorgesehen, dessen beide Schenkel Spreizstangen 8a und 8b bilden. Die oberen Enden der Spreizstangen 8a, 8b sind an Lagerarmen 12a, 12b schwenkbeweglich befestigt, die ihrerseits direkt oder über ein Zwischenelement an den Schiebestangen 14a, 14b derart befestigt sind, dass beim Vorschwenken der Schiebestangen 14a, 14b nach Lösen der Rastkupplungen 16a, 16b die Spreizstangen 8a, 8b automatisch um das Schwenklager des Brückenelementes 22 nach hinten verschwenkt werden. Beim Vorschieben des Profilrohres 11 nehmen die Spreizstangen 8a, 8b zunächst die aus Figur 6 ersichtliche Position ein. Danach erfolgt das rückseitige Umlegen derselben nach hinten. Wenn der Vorgang abgeschlossen ist, nimmt das Gestell die aus Figur 7 ersichtliche zusammengeklappte Position ein. Dabei kann der Schiebering 23, der über eine Rastkupplung 27 verschwenkbar gelagert ist, über das Lagerelement 4 geschwenkt werden, wodurch auch die Schwenkbewegung des Lagerelementes 4 mit der Gabel für das Vorderrad 5 blockiert ist.

In Abwandlung kann dieses in den Figuren 5 bis 7 dargestellte Wagengestell auch so ausgeführt sein, dass zu der vertikalen Faltung auch eine horizontale Faltung zwangsweise erfolgt. Zu diesem Zweck müssten die oberen Holme 1a, 1b untenseitig verschwenkbar am Verbindungsteil 9 befestigt und die Brückenverbindung an den Schiebestangen aufhebbar sein. Des Weiteren müssten die unteren Holme 2a, 2b und die Spreizstangen 8a, 8b schwenkbeweglich an dem Profilrohr 11 oder an den unten Seitenholmen 2a, 2b angelenkt sein.

### Bezugszeichenliste

- 1a: oberer Gestellholm
- 1b: oberer Gestellholm
- 2a: unterer Gestellholm
- 2b: unterer Gestellholm
- 3: hinteres Rad
- 4: Lagerelement
- 5: Vorderrad
- 6: Träger
- 7a: Stützholm
- 7b: Stützholm
- 8a: Spreizstange
- 8b: Spreizstange
- 9: Verbindungsteil
- 10: Teleskopstange
- 11: Profilrohr
- 12a: Lagerarm
- 12b: Lagerarm
- 13: Schwenklager
- 14a: Schiebestange
- 14b: Schiebestange

- 15: Einzelschieber
- 16a: Rastkupplung
- 16b: Rastkupplung
- 17: Schwenklager
- 18: Schwenklager
- 19: Lagerkammer
- 20: Lagerkammer
- 21: Schwenklager
- 22: Brückenelement
- 23: Schiebering
- 24: Querstange
- 25: hintere Achse
- 26: Bremspedal
- 27: Rastkupplung

## Patentansprüche

1. Schiebewagengestell für Kinder- und/oder Puppenwagen, mindestens aufweisend:
zwei obere, spiegelbildlich angeordnete, von vorn nach hinten ansteigend verlaufende, durchgehende oder aus miteinander verbundenen Abschnitten gebildete Gestellholme (1a, 1b) mit Schiebestangen (14a, 14b) vorgesehen sind,
zwischen denen im aufgestellten Zustand des Wagengestells ein Einsatz anordenbar ist und deren untere Enden zum Verbringen aus mindestens einer abgesenkten zusammengelegten Stellung in eine Aufstellposition mindestens nach oben schwenkbar an oder mit einem Verbindungsteil (9) schwenkbar und an mindestens einer in einem Profilrohr (11) geführten Teleskopstange (10) abgestützt sind, die in einer im Querschnitt angepassten Innenlängsführung im Profilrohr (11) zur Veränderung des Radachsenabstandes zwischen den Hinterrad- und den Vorderradachsen verschiebbar gelagert ist und mindestens in einer vorgezogenen Position arretierbar ist und an deren vorderen Ende Lagerelement (4) für die mindestens eine Vorderradanordnung vorgesehen sind,
zwei untere spiegelbildlich angeordnete Gestellholme (2a, 2b), an deren hinteren Enden Lagerelemente für Räder (3) oder Räderanordnungen befestigt sind und die vorderseitig an dem Profilrohr(11) angebracht sind,
zwei Spreizstangen (8a, 8b), die einerseits schwenkbeweglich an dem Profilrohr (11) oder den unteren Gestellholmen (2a, 2b) und andererseits an Lagerarmen (12a, 12b) an den Schiebestangen (14a, 14b) derart befestigt sind, dass beim Vorschwenken der Schiebestangen (14a, 14b) die Spreizstangen (8a, 8b) automatisch um die Schwenklager nach hinten verschwenken.

2. Schiebewagengestell nach Anspruch 1, **dadurch gekennzeichnet,**
- **dass** die zwei unteren spiegelbildlich angeordneten Gestellholme (2a, 2b) aus von vorn nach hinten im Wesentlichen V-förmig verlaufende, durchgehende oder aus miteinander verbundenen Abschnitten gebildete Gestellholme (2a, 2b) sind, an deren hinteren Enden Lagerelemente für hintere Räder (3) oder Räderanordnungen befestigt sind,
- **dass** ein aufstellbares Spreizgestänge vorgesehen ist, das mindestens zwei obere Spreizstangen (8a, 8b)aufweist, die seitlich nach oben abstehend verlaufen und untenseitig schwenkbar gelagert und mit ihren oberen Enden schwenkbeweglich mit den oberen Gestellholmen (1a, 1b) direkt oder indirekt verbunden sind,
- **dass** das Verbindungsteil (9) an der mindestens einen Teleskopstange (10) vorderseitig befestigt ist,
- **dass** das Profilrohr (11) Schwenklager (17) für die unteren schwenkbaren Gestellholme (2a, 2b) aufweist.

3. Schiebewagengestell nach Anspruch 1, **dadurch gekennzeichnet,**
- **dass** zwei obere, spiegelbildlich angeordnete, von vorn nach hinten ansteigend verlaufende, durchgehende oder aus miteinander verbundenen Abschnitten gebildete Gestellholme (1a, 1b) vorgesehen sind, zwischen denen im aufgestellten Zustand des Wagengestells ein Einsatz anordenbar ist und deren untere Enden zum Verbringen aus mindestens einer abgesenkten zusammengelegten Stellung in eine Aufstellposition mindestens nach oben schwenkbar an oder mit einem Verbindungsteil (9) schwenkbar gelagert und an mindestens einem Profilrohr (11) abgestützt sind,
- **dass** zwei untere spiegelbildlich angeordnete Gestellholme (2a, 2b) vorgesehen sind, an deren hinteren Enden Lagerelemente für Räder (3) oder Räderanordnungen befestigt sind,
- **dass** die zwei unteren spiegelbildlich angeordneten Gestellholme (2a, 2b) aus von vorn nach hinten verlaufende, durchgehende oder aus miteinander verbundenen Abschnitten gebildete Gestellholme (2a, 2b) sind, an deren hinteren Enden Lagerelemente für hintere Räder (3) oder Räderanordnungen befestigt sind,
- **dass** ein aufstellbares Spreizgestänge vorgesehen ist, das mindestens zwei obere Spreizstangen (8a, 8b) aufweist, die seitlich nach oben abstehend verlaufen und untenseitig schwenkbar gelagert und mit ihren oberen Enden schwenkbeweglich mit den oberen Gestellholmen (1a, 1b) direkt oder indirekt verbunden sind,
- **dass** das Verbindungsteil (9) an mindestens einer Teleskopstange (10) vorderseitig und um eine horizontale Achse eines Schwenklagers (21) schwenkbeweglich befestigt ist,
- **dass** das Profilrohr (11) Schwenklager oder Befestigungspunkte für die unteren schwenkbaren oder bügelförmig starr ausführbare Gestellholme (2a, 2b) aufweist,
- **dass** an dem Profilrohr (11) oder an einem Brückenelement (22) zwischen den unteren Holmen (2a, 2b) die beiden oberen Spreizstangen (8a, 8b) oder das Brückenelement mit den beiden oberen Spreizstangen (8a, 8b) oder die beiden oberen Spreizstangen (8a, 8b) direkt an den unteren Holmen (2a, 2b) schwenkbeweglich gelagert sind,
- **dass** das Profilrohr (11) als Träger (6) in der hinteren Verschiebeposition, in der das Wagengestell aufgestellt ist, mittels einer lösbaren Arretiereinrichtung an der Teleskopstange (10) fixiert ist, und
- **dass** an der Teleskopstange (10) vorderseitig das Lagerelement (4) für die Vorderradanordnung (5) vorgesehen ist,
wobei nach der Entriegelung der Arretiereinrichtung beim Verbringen des Wagengestells aus der Gebrauchsstellung in die zusammengeklappte Verstaustellung durch Vorschieben des Profilrohres (11) auf dem Teleskoprohr (10) die oberen Spreizstangen (8a, 8b) mindestens nach hinten über die unteren Gestellholme (2a, 2b) schwenken und die mitgekoppelten oberen Gestellholme (1a, 1b) in Richtung der Ebene der Teleskopstange (10) und der des Profilrohres (11) verschwenken.

4. Schiebewagengestell nach Anspruch 1, 2 oder 3, **dadurch gekennzeichnet, dass** sowohl die unteren Gestellholme (2a, 2b) als auch die oberen Stützholme (7a, 7b) in Richtung des Profilrohres (11) und mitgekoppelte obere Gestellholme (1a, 1b) in Richtung der Ebene der Teleskopstange (10) und der des Profilrohres (11) an der Teleskopstange (10) oder dem Profilrohr (11) verschwenkbar gelagert sind.

5. Schiebewagengestell nach Anspruch 2 oder 3, **dadurch gekennzeichnet, dass** die oberen Schwenklager (13) für die Enden der hinteren oberen Spreizstangen (8a, 8b) an den Holmen (1a, 1b) oder an den über Rastkupplungen (16a, 16b) angelenkten Schiebestangen (14a, 14b) im unteren Bereich direkt oder an an diesen befestigten, nach unten vorstehenden Lagerarmen (12a, 12b) oder an Gehäusearmen des Gehäuses der Rastkupplungen (16a, 16b) vorgesehen sind.

6. Schiebewagengestell nach einem der Ansprüche 2 bis 5, **dadurch gekennzeichnet, dass** die oberen Gestellholme (1a, 1b) mindestens bis zum Schwenkgelenk (13) der oberen Spreizstangen (8a, 8b) parabelförmig verlaufen, wobei diese entweder über das Verbindungsteil (9) oder direkt starr miteinander verbunden sind oder an dem Verbindungsteil (9) schwenkbeweglich angelenkt sind.

7. Schiebewagengestell nach Anspruch 1, 2 oder 3, **dadurch gekennzeichnet, dass** die Arretiereinrichtung einen Arretierzapfen aufweist, der in eine Arretierungsausnehmung oder in einen Arretierungsdurchbruch in der Wand des Profilrohres (11) und/oder der Teleskopstange (10) rastend eingreift.

8. Schiebewagengestell nach Anspruch 5, **dadurch gekennzeichnet, dass** die Lagerarme (12a, 12b) Bestandteil des Gehäuses der Rastkupplung (16a, 16b) sind, das an den oberen Gestellholmen (1a, 1b) obenseitig befestigt ist, oder dass die Lagerarme (12a, 12b) an der Schiebestange (14a, 14b) im unteren Bereich befestigt sind, wodurch beim Überschwenken der Schiebestangen (14a, 14b) nach Lösen der Arretiereinrichtung an dem Profilrohr (11) dieses automatisch vorschiebt.

9. Schiebewagengestell nach Anspruch 4, **dadurch gekennzeichnet, dass** die Spreizstangen (8a, 8b) und/oder die unteren hinteren Stützholme (2a, 2b) an dem Profilrohr (11) so angelenkt sind.

10. Schiebewagengestell nach Anspruch 1, 2 oder 3, **dadurch gekennzeichnet, dass** die Spreizstangen (8a, 8b) und/oder die unteren Gestellholme (2a, 2b) oder die Stützholme (7a, 7b) die seitlichen Arme eines Y-förmigen Stützhalters sind, der oder die mit der Mittensäule schwenkbeweglich an dem Profilrohr (11) obenseitig und/oder untenseitig mit dem Ende gelagert sind.

11. Schiebewagengestell nach Anspruch 1, 2, 3 oder 5, **dadurch gekennzeichnet, dass** die Teleskopstange (10) beim Einschieben in das Profilrohr (11) eine mechanische Federanordnung oder eine Gasdruckfeder in oder an dem Profilrohr (11) spannt, die in der gespannten Stellung arretierbar ist und nach dem Lösen der Arretierung die Teleskopstange (10) vorschiebt, oder in dem Profilrohr (11) mit einer Dämpfungseinrichtung zusammenwirkt, insbesondere mit einer Druckfeder, die auf die Längsachse der Teleskopstange (10) beim Schieben einwirkende Kräfte dämpft.

12. Schiebewagengestell nach Anspruch 2, 3, 5 oder 11, **dadurch gekennzeichnet, dass** das Verbindungsteil (9) auf der Teleskopstange (10) oder dem Profilrohr (11) längsverschiebbar und mindestens in einer vorderen Position fixierbar gelagert ist.

13. Schiebewagengestell nach einem der vorhergehenden Ansprüche, **dadurch gekennzeichnet, dass** zwei Profilrohre (11) parallel vorgesehen sind, in denen Teleskopstangen (10) unabhängig oder gemeinsam vorziehbar und einschiebbar gelagert sind.

14. Schiebewagengestell nach Anspruch 13, **dadurch gekennzeichnet, dass** die Verbindungsteile (9) und Träger (6) an beiden Teleskopstangen (10) und/oder Profilrohren (11) befestigt oder gelagert sind.
